# EUROPÄISCHE PATENTSCHRIFT

(11) **EP 2 386 219 B1**
(45) Veröffentlichungstag und Bekanntmachung des Hinweises auf die Patenterteilung: **03.04.2013**
(21) Anmeldenummer: 11164898.6
(22) Anmeldetag: 05.05.2011
(51) Int. Cl.: A45D 2/00, G01P 3/02

(54) **Elektrisch betriebener Haarglätter**
Electrically operated hair straightener
Lisseur à cheveux électrique

(30) Priorität: 11.05.2010 DE 102010028847
(43) Veröffentlichungstag der Anmeldung: 16.11.2011
(73) Patentinhaber: BSH Bosch und Siemens Hausgeräte GmbH, 81739 München (DE)
(72) Erfinder: Altmann, Berthold, 83374, Oderberg (DE); Copitzky, Thomas, 83278, Traunstein (DE); Hafer, Christian, 85435, Erding (DE); Olenberger, Marina, 21640, Horneburg (DE)

(56) Entgegenhaltungen:
- EP-A1- 1 926 574
- DE-A1- 4 418 292
- DE-U1-202008 016 616

## Beschreibung

Die vorliegende Erfindung betrifft einen elektrisch betriebenen Haarglätter mit einem Sensor zur Erfassung einer Relativgeschwindigkeit zwischen dem Haarglätter und den zu glättenden Haaren gemäß dem Oberbegriff des Anspruchs 1.

Aus der zum Zeitpunkt der vorliegenden Anmeldung noch nicht veröffentlichten, jedoch beim Deutschen Patent- und Markenamt unter dem Aktenzeichen DE 10 2010 002 292 anhängigen Patentanmeldung ist ein gattungsgemäßer Haarglätter bekannt, der einen Sensor zur Erfassung einer Relativgeschwindigkeit zwischen dem Haarglätter und den zu glättenden Haaren aufweist und derart ausgebildet ist, dass dieser Sensor bei Unter-/Überschreiten eines vordefinierten Grenzwerts ein Signal erzeugt. Dieses Signal soll dem Benutzer des Haarglätters dessen Anwendung erleichtern und insbesondere Schädigungen an den Haaren vermeiden. Ferner ist aus der EP 1 926 574 A1 ein elektrisches Haarentfernunasaerät bekannt, das als Sensoreinrichtung ein drehbar gelagerten Rotationskörper aufweist.

Die vorliegende Erfindung beschäftigt sich mit dem Problem, für einen gattungsgemäßen Haarglätter eine verbesserte Ausführungsform anzugeben, die insbesondere die Handhabung desselben vereinfacht.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, eine Relativgeschwindigkeit zwischen einem Haarglätter und darin geführten und zu glättenden Haaren mittels eines Sensors zu bestimmen, wobei die Bestimmung der Relativgeschwindigkeit über eine Drehgeschwindigkeit von zumindest einem drehbaren Körper ermittelt wird, der beim Benutzen des Haarglätters von den durch diesen hindurch gezogenen Haaren gedreht wird. Der Sensor ist darüber hinaus zum Erzeugen eines entsprechenden Signals, insbesondere eines Warnsignals, ausgebildet, sofern eine vordefinierte erste Grenzgeschwindigkeit unterschritten und/oder eine vordefinierte zweite Grenzgeschwindigkeit überschritten, das heißt allgemein ein durch die erste und die zweite Grenzgeschwindigkeit festgelegter Geschwindigkeitsbereich verlassen wird. Erfindungsgemäß ist das vom Sensor erzeugte Signal mehrstufig, insbesondere anschwellend, bei zunehmendem Unterschreiten der ersten Grenzaeschwindiakeit bzw. bei zunehmendem Überschreiten der zweiten Grenzgeschwindigkeit. Haarglätter bestehen in der Regel aus zwei beheizten (Glätt-)Platten, zwischen welchen die Haarsträhnen gelegt und nach einem Zusammendrücken der beiden beheizten Platten zwischen diesen hindurch gezogen werden. Für die Qualität der Haarglättung sind dabei insbesondere die Parameter Temperatur, Druck und Relativgeschwindigkeit zwischen den zu glättenden Haaren und dem Haarglätter entscheidend. Bei handelsüblichen Haarglättern ist ein Anwender gänzlich auf seine Erfahrung bzw. auf sein Gefühl hinsichtlich einer gewählten Relativgeschwindigkeit angewiesen, wobei eine zu geringe Relativgeschwindigkeit eine hohe Temperaturbelastung für die zu glättenden Haare und damit eine Schädigung derselben bewirken kann, während eine zu hohe Relativgeschwindigkeit ein lediglich unbefriedigendes Glättergebnis bedingt. Mit dem erfindungsgemäßen Haarglätter können diese Defizite einfach behoben werden, indem durch den zumindest einen drehbaren Körper die Geschwindigkeit der zu glättenden Haare relativ zum Haarglätter bestimmt werden kann und ein entsprechender Sensor automatisch ein Signal erzeugt, sofern die Relativgeschwindigkeit vordefinierte Grenzgeschwindigkeiten unter- bzw. überschreitet. Mit dem erfindungsgemäßen Haarglätter ist es somit selbst für Ungeübte möglich, diesen richtig anzuwenden und damit ein optimales Frisierergebnis zu erzielen, ohne das hierbei Schädigungen der Haare zu befürchten sind.

Bei einer vorteilhaften Weiterbildung der erfindungsgemäßen Lösung ist der wenigstens eine drehbare Körper als Kugel, als Walze, als Rad oder als Rolle ausgebildet. Insbesondere die Ausbildung als Walze bietet den großen Vorteil, eine Haarsträhne zum Antrieb der Walze heranzuziehen, wobei durch die Breite der Walze zugleich zuverlässig gewährleistet werden kann, dass die Haarsträhnen nicht an dieser vorbei gezogen werden können und dadurch eine falsche Relativgeschwindigkeit ermittelt wird. Derartige Walzen besitzen ebenso wie andere drehbare Körper Leichtlaufeigenschaften und sind demgemäß nahezu widerstandslos zu drehen. Darüber hinaus besitzen diese drehbaren Körper eine vorzugsweise rutschhemmende Oberfläche oder eine rutschhemmende Oberflächenstruktur, an welcher die Haare besonders gut haften und dadurch ein Durchziehen der Haare durch den Haarglätter eine Drehung der drehbaren Körper ohne Schlupf erzeugen. Das Drehen der drehbaren Körper ohne Schlupf ist dabei für die Ermittlung einer exakten Relativgeschwindigkeit unerlässlich. Eine derartige rutschhemmende Oberfläche bzw. eine derartige rutschhemmende Oberflächenstruktur kann bspw. durch eine gummierte und entsprechend strukturierte Oberfläche erreicht werden.

Bei einer vorteilhaften Weiterbildung der erfindungsgemäßen Lösung, ist das vom Sensor erzeugte Signal bei einem Unterschreiten der vordefinierten ersten Grenzgeschwindigkeit und/oder bei Überschreiten der vordefinierten zweiten Grenzgeschwindigkeit akustischer, optischer und/oder haptischer Art. Insbesondere ein akustisches bzw. haptisches Warnsignal erleichtert dabei die Anwendung des erfindungsgemäßen Haarglätters erheblich, da der Benutzer unabhängig davon, ob ein Sichtkontakt zum Haarglätter besteht, darüber informiert wird, ob er diesen bezüglich der Durchzugsgeschwindigkeit der Haare richtig einsetzt oder nicht. Ein akustisches Signal kann bspw. in der Art eines Tons oder einer Tonfolge ausgebildet sein, wobei auch denkbar ist, dass eine Tonhöhe bzw. die Tonfolge in Abhängigkeit der Durchzugsgeschwindigkeit variiert. Ein haptisches Signal kann bspw. ähnlich eines Vibrationsalarms bei einem Mobiltelefon erfolgen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und wird in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Draufsicht und eine Seitenansicht eines erfindungsgemäßen Haarglätters,
- Fig. 2-8: jeweils Schnittdarstellungen entlang der Schnittebene A-A' mit unterschiedlicher Anzahl und Anordnung drehbarer Körper zur Ermittlung einer Relativgeschwindigkeit zwischen dem Haarglätter und dem durch diesen hindurch gezogenen Haaren.

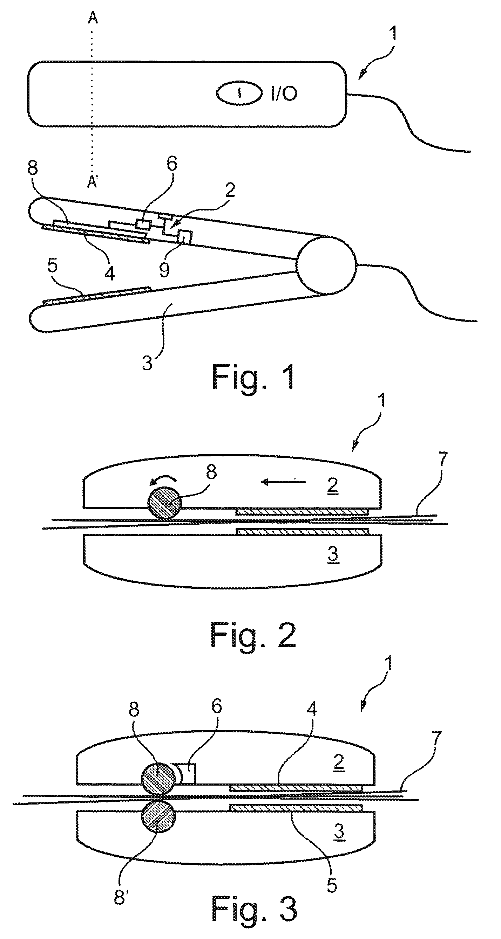

Entsprechend der Fig. 1, weist ein erfindungsgemäß elektrisch betriebener Haarglätter 1 zwei Arme 2 und 3 auf, welche gelenkig aneinander gelagert sind und welche jeweils eine beheizbare Glättplatte 4 bzw. 5 aufweisen. Erfindungsgemäß ist darüber hinaus ein Sensor 6 vorgesehen, der eine Relativgeschwindigkeit zwischen dem Haarglätter 1 und den zu glättenden Haaren 7 erfasst und bei Unter- bzw. Überschreiten vordefinierter relativer Grenzgeschwindigkeiten ein Signal erzeugt. Am Haarglätter 1 bzw. an zumindest einem der Arme 2, 3 des Haarglätters 1, ist zumindest ein drehbarer Körper 8 vorgesehen, der beim Benutzen des Haarglätters 1 von den durch diesen hindurch gezogenen Haaren 7 gedreht wird (vgl. Fig. 2). Der Sensor 6 ermittelt nun die Relativgeschwindigkeit zwischen dem Haarglätter 1 und den Haaren 7 aus der Drehbewegung des zumindest einen Körpers 8, der bspw. als Kugel, als Rad oder als Rolle, vorzugsweise jedoch als Walze ausgebildet ist.

Gemäß der Fig. 2 ist dabei ein Querschnitt durch einen Haarglätter 1 gezeigt, der lediglich am Arm 2 einen drehbaren Körper 8, nämlich eine drehbare Walze, aufweist, und über diese die Relativgeschwindigkeit zwischen dem Haarglätter 1 und den Haaren 7 ermittelt. Demgegenüber sind gemäß der Fig. 3 an den beiden Armen 2, 3 des Haarglätters 1 zwei sich gegenüberliegende drehbare Körper 8 und 8' vorgesehen, zwischen welchen die Haare 7 beim Benutzen des Haarglätters 1 hindurch gezogen werden.

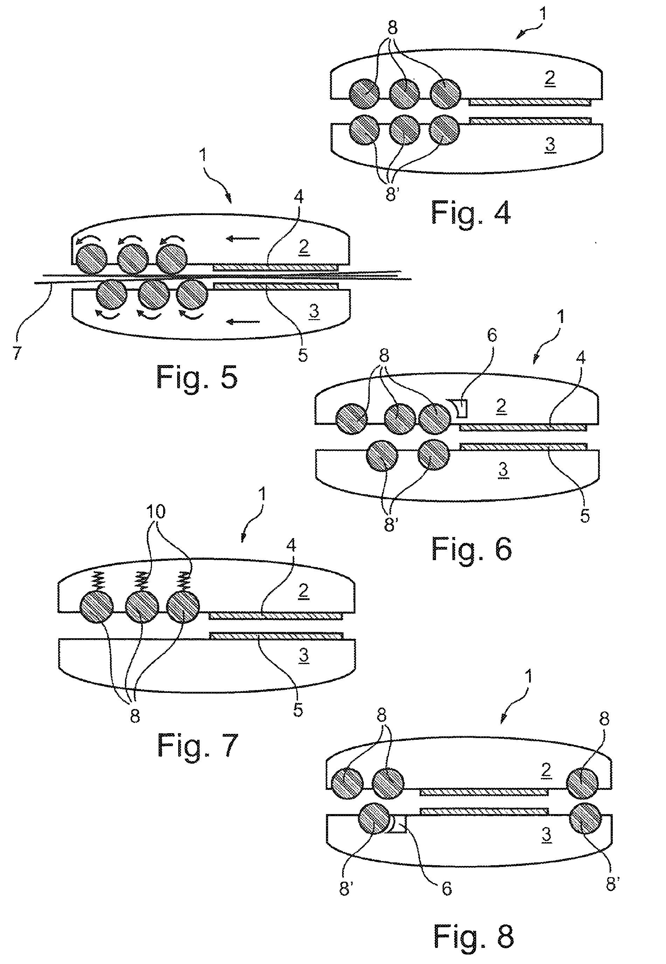

Gemäß den Fig. 4 bis 8 sind weitere Ausführungsformen des erfindungsgemäßen Haarglätters 1 gezeigt, wobei in der Fig. 4 insgesamt drei Körperpaare gezeigt sind mit jeweils zwei gegenüberliegenden Körpern 8 und 8'. Eine gleiche Anzahl an drehbaren Körpern 8 und 8' weist der Haarglätter 1 gemäß der Fig. 5 auf, wobei die drehbaren Körper 8' relativ zu den drehbaren Körpern 8 versetzt angeordnet sind. Auch eine ungerade Anzahl an drehbaren Körpern 8, 8' ist denkbar, wie dies bspw. gemäß der Fig. 6 dargestellt ist. In der Fig. 8 sind die drehbaren Körper 8 und 8' als Körperpaare in Verfahrrichtung des Haarglätters 1 vor und hinter den Glättplatten 4, 5 angeordnet.

Der wenigstens eine Sensor 6 ist erfindungsgemäß darüber hinaus in der Lage, bei Unterschreiten einer vordefinierten ersten Grenzgeschwindigkeit ein Steuersignal an eine Steuereinrichtung 9 zu übermitteln, wobei die Steuereinrichtung 9 derart ausgebildet ist, dass sie nach Erhalt des Steuersignals eine Heizleistung an zumindest einer Glättplatte 4, 5 zumindest reduziert. Bei Überschreiten der vordefinierten zweiten Grenzgeschwindigkeit kann die Steuereinrichtung 9 die Heizleistung zumindest einer beheizbaren Glättplatte 4, 5 erhöhen.

Um eine möglichst exakte Erfassung der Relativgeschwindigkeit zwischen dem Haarglätter 1 und den zu glättenden Haaren 7 zu ermöglichen, kann der wenigstens eine Körper 8, 8' eine rutschhemmende Oberfläche oder eine rutschhemmende Oberflächenstruktur aufweisen, bspw. gestaltet durch eine Gummierung. Auch ist denkbar, den wenigstens einen Körper 8, 8' elastisch, insbesondere federelastisch, zu lagern, wodurch eine gewisse Anpresskraft an die Haare 7 erzwungen wird. Dies soll insbesondere eine schlupffreie Drehbewegung der Körper 8, 8' ermöglichen. Eine derartige federelastische Lagerung der Körper 8, 8' ist bspw. gemäß der Fig. 7 dargestellt und durch entsprechende Federelemente 10 realisiert.

Besitzt der erfindungsgemäße Haarglätter 1 mehrere Körperpaare 8, 8', wie dies bspw. gemäß den Fig. 4 bis 6 und 8 dargestellt ist, so kann der Sensor 6 derart ausgebildet sein, dass er die Relativgeschwindigkeit ausschließlich aus den Körpern bzw. Körperpaaren 8, 8' mit der höchsten Drehgeschwindigkeit ermittelt, da bei diesen kein oder ein zumindest lediglich geringer Schlupf zwischen den drehbaren Körpern 8 und 8' und den Haaren 7 zu erwarten ist. Denkbar ist selbstverständlich auch eine Mittlung der erfassten Drehgeschwindigkeiten.

Um den Benutzer des erfindungsgemäßen Haarglätters 1 eine optimale Anwendung desselben anzeigen zu können, kann der Sensor 6 ein optisches, ein akustisches und/oder ein haptisches Signal erzeugen, wobei insbesondere bei der Erzeugung akustischer Signale eine Tonfolge bzw. eine Tonhöhe an die jeweils ermittelte Relativgeschwindigkeit adaptiert sein kann. Ein haptisches Signal kann bspw. ähnlich einem Vibrationsalarm bei einem Mobiltelefon erfolgen. Der Sensor 6 ermittelt dabei die Drehgeschwindigkeit des wenigstens einen drehbaren Körpers 8, 8' elektrisch, optisch, mechanisch oder magnetisch. Das vom Sensor 6 erzeugte Signal ist mehrstufig, insbesondere anschwellend, bei zunehmendem Unterschreiten der ersten Grenzgeschwindigkeit bzw. bei zunehmendem Überschreiten der zweiten Grenzgeschwindigkeit. Bei geringen Abweichungen von dem durch die erste und zweite Grenzgeschwindigkeit festgelegten Geschwindigkeitsbereich kann beispielsweise ein schwaches Signal erzeugt werden, das bei zunehmender Abweichung anschwillt. Denkbar ist auch, dass der Geschwindigkeitsbereich in Abhängigkeit der Haare bzw. eines Harrzustandes verschoben oder hinsichtlich seiner Grenzgeschwindigkeiten veränderbar ist. Bei vorgeschädigtem Haar kann die erste/zweite Grenzgeschwindigkeit somit einen anderen Wert aufweisen, als bei gesundem Haar.

Mit dem erfindungsgemäßen Haarglätter 1 kann einerseits ein optimales Frisierergebnis gewährleistet und andererseits eine Schädigung der Haare, bspw. hervorgerufen durch eine zu hohe Temperaturbelastung, zuverlässig ausgeschlossen werden. Durch die Erfassung der Durchziehgeschwindigkeit der Haare 7 durch den Haarglätter 1 kann ein wesentlicher Parameter zur Gewährleistung eines befriedigenden Frisierergebnisses bestimmt werden.

### Bezugszeichnliste

- 1: Haarglätter
- 2: Arm
- 3: Arm
- 4: Glättplatte
- 5: Glättplatte
- 6: Sensor
- 7: Haare
- 8: drehbarer Körper
- 9: Steuereinrichtung
- 10: Federelement

## Patentansprüche

1. Elektrisch betriebener Haarglätter (1) mit einem Sensor (6) zur Erfassung einer Relativgeschwindigkeit zwischen dem Haarglätter (1) und zu glättenden Haaren (7), wobei der Sensor (6) bei Unterschreiten einer vordefinierten ersten Grenzgeschwindigkeit und/oder bei Überschreiten einer vordefinierten zweiten Grenzgeschwindigkeit ein Signal erzeugt, wobei der Haarglätter (1) zumindest einen drehbaren Körper (8,8') aufweist, der beim Benutzen des Haarglätters (1) von den durch diesen hindurch gezogenen Haaren (7) gedreht wird, und wobei der Sensor (6) eine Drehbewegung des zumindest einen Körpers (8,8') erfasst und daraus die Relativgeschwindigkeit zwischen dem Haarglätter (1) und den Haaren (7) ermittelt, **dadurch gekennzeichnet, dass** das vom Sensor (6) erzeugte Signal mehrstufig, insbesondere anschwellend, bei zunehmendem Unterschreiten der ersten Grenzgeschwindigkeit bzw. bei zunehmendem Überschreiten der zweiten Grenzgeschwindigkeit ist.

2. Haarglätter nach Anspruch 1, **dadurch gekennzeichnet, dass** der wenigstens eine drehbare Körper (8,8') als Kugel, als Walze, als Rad oder als Rolle ausgebildet ist.

3. Haarglätter nach Anspruch 1 oder 2, **dadurch gekennzeichnet, dass** zumindest zwei sich gegenüberliegende drehbare Körper (8,8') vorgesehen sind, zwischen welchen die Haare (7) beim Benutzen des Haarglätters (1) hindurchgezogen werden.

4. Haarglätter nach einem der Ansprüche 1 bis 3, **dadurch gekennzeichnet,**
- **dass** der wenigstens eine Sensor (6) bei Unterschreiten der vordefinierten ersten Grenzgeschwindigkeit ein Steuersignal an eine Steuereinrichtung (9) übermittelt, wobei die Steuereinrichtung (9) derart ausgebildet ist, dass sie nach Erhalt des Steuersignals eine Heizleistung einer Glättplatte (4,5) zumindest reduziert, und/oder
- **dass** der wenigstens eine Sensor (6) bei Überschreiten der vordefinierten zweiten Grenzgeschwindigkeit ein Steuersignal an die Steuereinrichtung (9) übermittelt, wobei die Steuereinrichtung (9) derart ausgebildet ist, dass sie nach Erhalt des Steuersignals eine Heizleistung der Glättplatte (4,5) erhöht.

5. Haarglätter nach einem der Ansprüche 1 bis 4, **dadurch gekennzeichnet, dass** der wenigstens eine Körper (8,8') eine rutschhemmende Oberfläche oder eine rutschhemmende Oberflächenstruktur aufweist.

6. Haarglätter nach einem der Ansprüche 1 bis 5, **dadurch gekennzeichnet, dass** der wenigstens eine Körper (8,8') elastisch, insbesondere federelastisch, gelagert ist.

7. Haarglätter nach einem der Ansprüche 1 bis 6, **dadurch gekennzeichnet, dass** mehrere Körperpaare (8,8') vorgesehen sind, wobei der Sensor (6) die Relativgeschwindigkeit ausschließlich aus den Körperpaaren (8,8') mit der höchsten Drehgeschwindigkeit ermittelt.

8. Haarglätter nach einem der Ansprüche 1 bis 7, **dadurch gekennzeichnet, dass** das vom Sensor (6) erzeugte Signal akustischer, optischer und/oder haptischer Art ist.

9. Haarglätter nach einem der Ansprüche 1 bis 8, **dadurch gekennzeichnet, dass** der Sensor (6) die Drehgeschwindigkeit des wenigstens einen Körpers (8,8') elektrisch, optisch, mechanisch oder magnetisch erfasst.

## Claims

1. Electrically operated hair straightener (1) with a sensor (6) for detecting a relative speed between the hair straightener (1) and hairs (7) to be straightened, wherein the sensor (6) generates a signal when a predefined first limit speed is fallen below and/or when a predefined second limit speed is exceeded, wherein the hair straightener (1) comprises at least one rotatable body (8, 8') which when the hair straightener (1) is used is rotated by hairs (7) drawn therethrough and wherein the sensor (6) detects a rotational movement of the at least one body (8, 8') and determines therefrom the relative speed between the hair straightener (1) and the hairs (7), **characterised in that** the signal generated by the sensor (6) is multi-staged, particularly increasing, when the first limit speed is increasingly fallen below or the second limit speed is increasingly exceeded.

2. Hair straightener according to claim 1, **characterised in that** at least one rotatable body (8, 8') is constructed as a ball, as a roll, as a wheel or as a roller.

3. Hair straightener according to claim 1 or 2, **characterised in that** at least two mutually opposite rotatable bodies (8, 8') are provided, between which hairs (7) are drawn through when the hair straightener (1) is used.

4. Hair straightener according to any one of claims 1 to 3, **characterised in that**
- the at least one sensor (6) communicates a control signal to a control device (9) when the predefined first limit speed is fallen below, wherein the control device (9) is so constructed that after receipt of the control signal it at least reduces a heat output of a straightening plate (4, 5) and/or
- the at least one sensor (6) communicates a control signal to the control device (9) when the predefined second limit speed is exceeded, wherein the control device (9) is so constructed that it increases a heat output of the straightening plate (4, 5) after receipt of the control signal.

5. Hair straightener according to any one of claims 1 to 4, **characterised in that** the at least one body (8, 8') has a slip-resistant surface or a slip-resistant surface structure.

6. Hair straightener according to any one of claims 1 to 5, **characterised in that** the at least one body (8, 8') is resiliently, particularly spring-resiliently, mounted.

7. Hair straightener according to any one of claims 1 to 6, **characterised in that** a plurality of body pairs (8, 8') is provided, wherein the sensor (6) determines the relative speed exclusively from the body pair (8, 8') with the highest rotational speed.

8. Hair straightener according to any one of claims 1 to 7, **characterised in that** the signal generated by the sensor (6) is of an acoustic, an optical and/or a haptic kind.

9. Hair straightener according to any one of claims 1 to 8, **characterised in that** the sensor (6) detects the rotational speed of the at least one body (8, 8') electrically, optically, mechanically or magnetically.

## Revendications

1. Lisseur de cheveux (1) à fonctionnement électrique comprenant un capteur (6) pour détecter une vitesse relative entre le lisseur (1) et les cheveux à lisser (7), le capteur (6) produisant un signal lorsque la vitesse est inférieure à une première vitesse limite prédéfinie et/ou supérieure à une seconde vitesse limite prédéfinie, le lisseur (1) présentant au moins un corps rotatif (8, 8') qui pendant l'utilisation du lisseur (1) est mis en rotation par les cheveux étirés à travers celui-ci, et le capteur (6) détectant une rotation dudit au moins un corps (8, 8') à partir de laquelle il détermine la vitesse relative entre le lisseur (1) et les cheveux (7), **caractérisé en ce que** le signal produit par le capteur (6) est un signal à plusieurs niveaux, en particulier un signal dont l'intensité augmente à mesure que la vitesse descend progressivement sous la première vitesse limite et/ou dépasse progressivement la seconde vitesse limite.

2. Lisseur de cheveux selon la revendication 1, **caractérisé en ce que** ledit au moins un corps rotatif (8, 8') est conçu sous forme de bille, de cylindre, de molette ou de rouleau.

3. Lisseur de cheveux selon la revendication 1 ou 2, **caractérisé en ce qu'**il est prévu au moins deux corps rotatifs (8, 8') se faisant face, entre lesquels les cheveux (7) sont étirés pendant l'utilisation du lisseur (1).

4. Lisseur de cheveux selon l'une des revendications 1 à 3, **caractérisé en ce que**
- lorsque la vitesse est inférieure à la première vitesse limite prédéfinie, ledit au moins un capteur (6) transmet un signal de commande à un dispositif de commande (9), le dispositif de commande (9) étant conçu de telle sorte qu'il réduit au moins une puissance de chauffage d'une plaque de lissage (4, 5) après réception du signal de commande, et/ou
- lorsque la vitesse est supérieure à la seconde vitesse limite prédéfinie, ledit au moins un capteur (6) transmet un signal de commande au dispositif de commande (9), le dispositif de commande (9) étant conçu de telle sorte qu'il augmente une puissance de chauffage de la plaque de lissage (4, 5) après réception du signal de commande.

5. Lisseur de cheveux selon l'une des revendications 1 à 4, **caractérisé en ce que** ledit au moins un corps (8, 8') a une surface antidérapante ou une structure de surface antidérapante.

6. Lisseur de cheveux selon l'une des revendications 1 à 5, **caractérisé en ce que** ledit au moins un corps (8, 8') est logé de manière élastique, en particulier de manière élastique à ressort.

7. Lisseur de cheveux selon l'une des revendications 1 à 6, **caractérisé en ce qu'**il est prévu plusieurs paires de corps (8, 8'), le capteur (6) déterminant la vitesse relative exclusivement à partir des paires de corps (8, 8') ayant la vitesse de rotation la plus élevée.

8. Lisseur de cheveux selon l'une des revendications 1 à 7, **caractérisé en ce que** le signal produit par le capteur (6) est de type acoustique, optique et/ou haptique.

9. Lisseur de cheveux selon l'une des revendications 1 à 8, **caractérisé en ce que** le capteur (6) détecte la vitesse de rotation dudit au moins un corps (8, 8') de manière électrique, optique, mécanique ou magnétique.
